Europäisches Patentamt

European Patent Office

Office européen des brevets

(19)

(11) **EP 0 748 454 B1**

(12) **EUROPÄISCHE PATENTSCHRIFT**

(45) Veröffentlichungstag und Bekanntmachung des Hinweises auf die Patenterteilung:
**29.04.1998 Patentblatt 1998/18**

(21) Anmeldenummer: **95910420.9**

(22) Anmeldetag: **28.02.1995**

(51) Int Cl.⁶: **G01S 7/52**, G01S 15/52

(86) Internationale Anmeldenummer:
**PCT/DE95/00254**

(87) Internationale Veröffentlichungsnummer:
**WO 95/23344 (31.08.1995 Gazette 1995/37)**

(54) **VERFAHREN ZUR BESTIMMUNG DER LAGE EINES OBJEKTS RELATIV ZUM HINTERGRUND MITTELS ULTRASCHALL**

METHOD OF DETERMINING THE POSITION OF AN OBJECT RELATIVE TO THE BACKGROUND USING ULTRASONICS

PROCEDE PERMETTANT DE DETERMINER DE MANIERE ULTRASONORE LA POSITION D'UN OBJET PAR RAPPORT A UN ARRIERE-PLAN

(84) Benannte Vertragsstaaten:
**CH DE FR GB LI**

(30) Priorität: **28.02.1994 DE 4406525**

(43) Veröffentlichungstag der Anmeldung:
**18.12.1996 Patentblatt 1996/51**

(73) Patentinhaber: **SIEMENS AKTIENGESELLSCHAFT 80333 München (DE)**

(72) Erfinder:
• **ECCARDT, Peter-Christian D-85521 Ottobrunn (DE)**
• **KRÖMER, Nils D-09337 Hohenstein-Ernstthal (DE)**
• **LECHNER, Stefan D-81369 München (DE)**
• **MAGORI, Valentin D-81539 München (DE)**
• **VOSSIEK, Martin D-59075 Hamm (DE)**

(56) Entgegenhaltungen:
DE-A- 3 906 627          US-A- 3 184 969
US-A- 4 868 797

**Beschreibung**

Ein Objekterkennungssystem, das mit einem Sende- und einem Empfangsultraschallwandler arbeitet ist aus der P 42 38 262.9 bekannt. Ein einzelner Ultraschallwandler sendet ein Ultraschallsignal in Richtung der Objektszene aus. Das daran reflektierte Signal, das Echo, enthält die maßgeblichen Informationen der Struktur der Objektszene. Empfangen wird das Echosignal von wiederum einem einzelnen Ultraschallwandler. Bei dem verwendeten Wandlerprinzip handelt es sich um einen richtscharfen Ultraschallwandler. Die Nachteile dieser Anordnung und des sich daraus ergebenden Signalauswerteverfahrens liegen in der niedrigen Abtastraste des Meßsystems, sowie in der Schwierigkeit einen großen Objektszenenbereich großflächig auszuwerten und in der geringen lateralen Auflösung,

Die Aufgabe der Erfindung ist es ein Verfahren anzugeben, mit dem die Lage eines Objekts relativ zum Hintergrund bestimmt werden kann.

Die Aufgabe wird durch ein Verfahren gemäß dem Patentanspruch 1 gelöst.

Eine Weiterbildung der Erfindung ist in Anspruch 2 angegeben. Der Vorteil liegt in der Erhöhung der Meßgenauigkeit.

Mit der in Anspruch 3 angegebenen Weiterbildung ist die Objektumrandung detektierbar.

Mit der in Anspruch 4 angegebenen Weiterbildung ist die gesamte zu messende Breite in einem Schritt erfaßbar.

Mit den in Anspruch 6, 7 und 8 angegebenen Merkmalen ist es möglich die Meßrate zu erhöhen.

Zusätzliche Weiterbildungen der Erfindung ergeben sich aus den übrigen abhängigen Ansprüchen.

Weiterhin ist es von Vorteil, daß das Verfahren an die Anzahl der zur Verfügung stehenden Ultraschallwandler einfach anpaßbar ist.

Anhand der Figuren soll die Erfindung näher erläutert werden. Es zeigt:

Figur 1             den Meßaufbau im Schnitt quer zur Bewegungsrichtung des Förderbands,

Figur 2             den Aufbau eines Ultraschallwandlers aus Piezopolymerfolie,

Figur 3             den Frquenzgang eines, wie in Figur 3 gezeigten Ultraschallwandlers,

Figur 4             die Impulsantwort eines, wie in Figur 3 gezeigten Ultraschallwandlers,

Figur 5a            den Verlauf der Ultraschall-Signalamplitude eines, wie in Figur 3 gezeigten Ultraschallwandlers, in der yz-Ebene,

Figur 5b            den Verlauf der Ultraschall-Signalamplitude eines, wie in Figur 3 gezeigten Ultraschallwandlers, in der xz-Ebene,

Figur 6             die Übertragungsstrecke des Systems,

Figur 7             den Vorgang des Sendens und Empfangens eines Ultraschallsignals bei sequentiellem Senden und Empfangen,

Figur 8             den Vorgang des Sendens und Empfangens eines Ultraschallsignals auf zwei Frequenzbändern,

Figur 9             das Senden, den Empfang und die Verarbeitung in Form von Korrelation eines Ultraschallsignals für einen Empfänger,

Figur 10 a und b    die Ergebnis funktionen,

Figur 11 a und b    zwei mögliche Reflexionen und die dazugehörigen Ergebnisfunktionen,

Figur 12a           eine Meßsituation bei der alle Reflexionsarten auftreten und 12b - f die dazugehörigen Ergebnisfunktionen,

Figur 13 a und b    die Zugehörigkeitsfunktionen für eine Fuzzy-Auswertung,

Figur 14            eine weitere Zugehörigkeitsfunktion für die Fuzzy-Auswertung,

Figur 15                    zusätzliche Zugehörigkeitsfunktionen für die Fuzzy-Auswertung und

Figur 16                    das Ergebnis der Fuzzy-Inferenz.

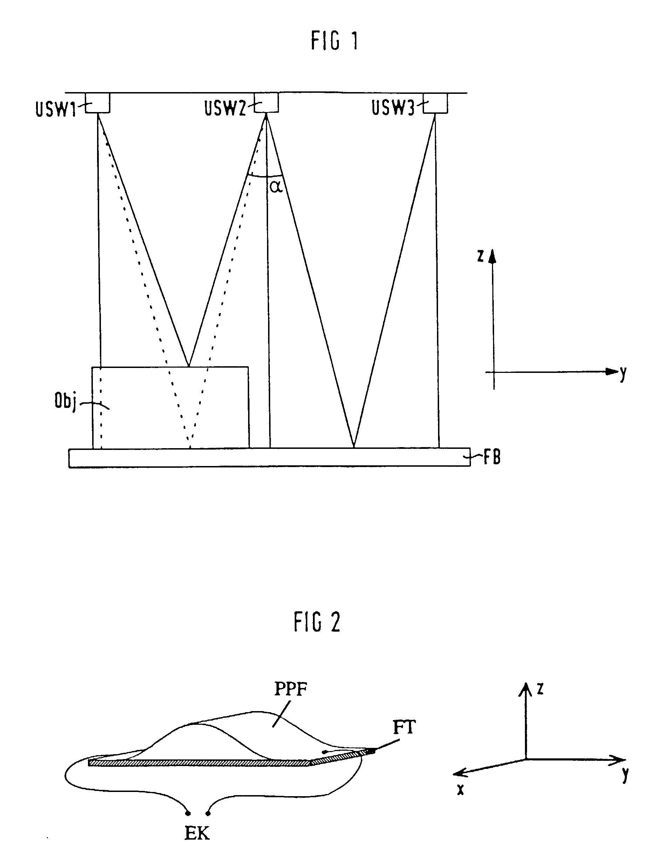

Der Aufbau des Meßsystems ist in Figur 1 schematisch dargestellt. In einer Höhe von 80cm sind 3 Ultraschallwandler USW1, USW2, USW3 mit einem Abstand von je 26cm zueinander quer über dem 60cm breiten Förderband FB angebracht. Bei den verwendeten Ultraschallwandlern, deren Impulsantwort und Spektrum in Figur 2 gezeigt ist, handelt es sich um PVDF-Folienwandler, wie sie aus W. Manthey, N. Kroemer, V. Mágori, "Ultrasonic transducers and transducer arrays for application in "air", Meas. Sci. Technol. Vol 3(3), Seite 249 bis 261, März 1992 beschrieben sind. Ihre Mittenfrequenz liegt bei ca. 60 kHz. Die 3 dB Bandbreite beträgt etwa 15 kHz. Die Abstrahlrichtung der Ultraschallwandler USW1, USW2, USW3 ist senkrecht zur Förderbandoberfläche ausgerichtet.

Die Steuerung des Meßablaufs und die Signalverarbeitung übernimmt ein Mikroprozessor. Ein Signalgenerator regt die Ultraschallwandler USW1, USW2, USW3 mit frei programmierbaren Signalen an. Die Empfangssignale werden nach einer Signalvorverarbeitung, z.B. einer Verstärkung oder Filterung digitalisiert zum Prozessor zur weiteren Auswertung übertragen. Die Ausgabe der Ergebnisse erfolgt über eine definierte Schnittstelle.

Aufbau des Meßsystems

Meßsituation und Anordnung der Ultraschallwandler

Um mit wenigen Wandlern aussagekräftige Meßsignale zu erhalten, kommt der Anordnung der Sensoren eine besondere Bedeutung zu.

Da die Objekte Obj(Gegenstände) auf dem Förderband FB bewegt werden, muß nicht das ganze Objekt auf einmal erfaßt werden, sondern es genügt zur Erfassung der Objektmaße, einen schmalen Streifen mehrmals quer zur Förderrichtung zu vermessen, während das Objekt Obj weiter transportiert wird. So sollen mehrere laterale Höhenprofile des Objekts Obj bestimmt werden. Über Messungen in gleichmäßigen, möglichst kurzen Zeitabständen kann so über die Höhenprofile auch die Position in Bandlaufrichtung bestimmt und somit ein relativ genaues Bild des Objekts auf dem Förderband rekonstruiert werden.

Um zur Bestimmung des Höhenprofils geeignete Signale von den Ultraschallwandlern zu erhalten, werden mehrere Wandler USW1, USW2 und USW3 in einer Reihe in gleichmäßigem Abstand quer zur Förderrichtung über dem Förderband FB angeordnet. Die Hauptabstrahlrichtung der Ultraschallwandler zeigt dabei senkrecht auf das Förderband FB.

In Figur 1 ist ein Schnitt quer zur Förderrichtung dargestellt. Der Anteil der Ultraschallwelle, der senkrecht auf den Hintergrund - im nachfolgenden auch Förderband FB oder Untergrund gennant- auftrifft, wird zum Sender zurückreflektiert. Um nicht zu viele Ultraschallwandler verwenden zu müssen, sollen auch die Schallwege von einem Wandler zum benachbarten Wandler bei der Auswertung berücksichtigt werden. Die Ultraschallwandler sollten deswegen einen großen Abstrahlwinkel a quer zur

Bewegungsrichtung des Förderbandes FB haben, damit die reflektierten Wellen auch mit ausreichender Amplitude am benachbarten Empfänger ankommen. Liegt ein Objekt Obj unter den Wandlern USW1, USW2 und USW3, so wird ein Teil der Schallwelle nicht mehr vom Untergrund sondern vom Objekt Obj reflektiert. Die Schallaufzeit verkürzt sich dadurch. Durch Vergleich der Meßsignale mit den Referenzsignalen (wenn kein Objekt im Meßbereich liegt) soll das Höhenprofil des Objekts Obj bestimmt werden.

Bei den durchgeführten Versuchen wurde mit einer Anordnung von drei Ultraschallwandlern USW1, USW2, USW3 gearbeitet, die in einem Abstand von 26 cm zueinander in einer Höhe von 80 cm über dem Untergrund angebracht sind. Mit dieser Anordnung kann eine Breite von 60 cm erfaßt werden.

Ultraschallwandler

Als Ultraschallwandler werden Wandler aus Piezopolymerfolien PPF benutzt, vergleiche dazu auch Figur 2. Mit dieser Technologie können Wandler mit großer Übertragungsbandbreite kostengünstig hergestellt werden. Außerdem läßt sich die Richtcharakteristik sehr gut an die gewünschte Situation anpassen. Aufgrund ihrer relativ guten Impedanzanpassung an gasförmige Medien sind piezoelektrische Polymerfolien für die Luftultraschallanwendung bestens geeignet.

Bei dem vorgestellten Meßsystem werden Ultraschallwandler mit einer Resonanzfrequenz von 60 kHz verwendet. Der Aufbau eines der verwendeten Wandler ist in Figur 2 dargestellt. Auf einen ebenen Folienträger FT ist eine Piezopolymerfolie PPF aufgebracht. Als Folienträger FT dient ein doppelseitig klebendes Polyurethanschaumband. Neben seinen akustisch dämpfenden Eigenschaften bietet es den Vorteil, daß die Folie zur seitlichen Fixierung auf den Folienträger FT nur aufgeklebt werden muß. Als Folienmaterial wird das Piezopolymer Polyvinylidenfluorid verwendet.

EP 0 748 454 B1

Aus der hier angewandten Art der Befestigung ergibt sich für die schwingende Folie eine hutförmige Geometrie. In der Mitte hat die Folie eine konvexe Wölbung, die im Bereich der Befestigung in eine konkave Wölbung übergeht. Über die Geometrie der Folienwölbung, das heißt im wesentlichen über ihre Höhe und Breite, werden die Eigenschaften des Wandlers, zum Beispiel Resonanzfrequenz und Richtcharakteristik, bestimmt. Die Kontaktierung der beidseitig metallisierten Piezopolymerfolie PPF erfolgt mit Bonddrähten EK, die mit Silberleitkleber aufgebracht werden.

Der Wandler kann sowohl als Sender als auch als Empfänger von Ultraschallsignalen betrieben werden.

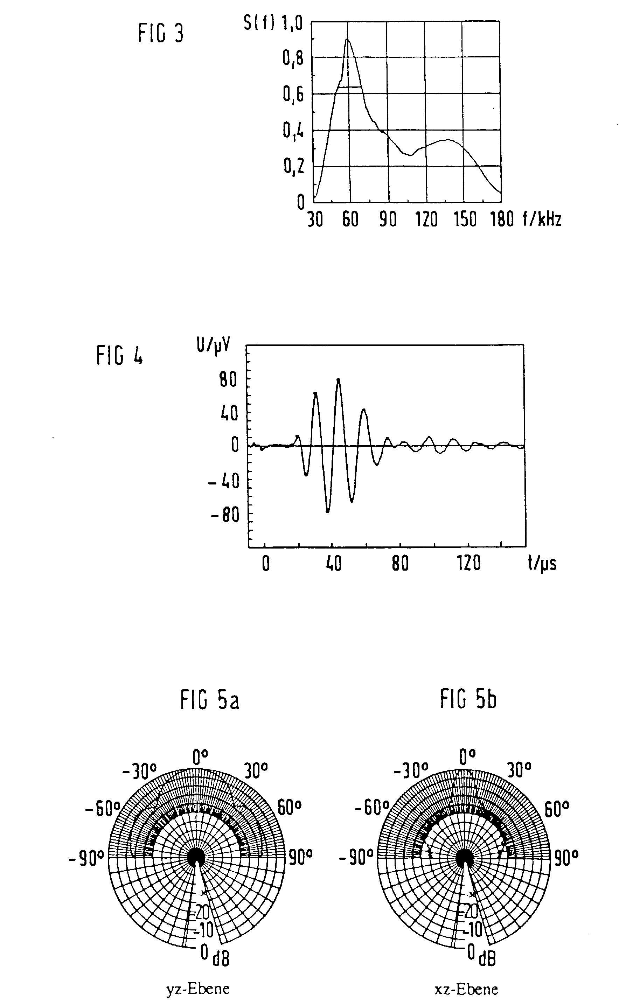

Im folgenden sollen kurz die wichtigsten Eigenschaften der verwendeten Wandler beschrieben werden. In Figur 3 ist der Frequenzgang des Wandlers im Sendebetrieb zu sehen. Die Resonanzfrequenz des Ultraschallwandlers liegt bei 60 kHz, die 3dB-Bandbreite beträgt 16 kHz. Im relevanten Bereich um die Resonanzfrequenz hat der Frequenzgang beim Empfang einen ähnlichen Verlauf.

Figur 4 zeigt die Impulsantwort des Wandlers im wechselseitigen Sende-Empfangs-Betrieb mit Reflexion an einer ebene Fläche.

In der yz-Ebene, siehe Figur 5a, zeigt der Verlauf ein relativ breites Maximum um die Hauptabstrahlrichtung, während die Keule in der xz-Ebene, Figur 5b, wesentlich schmäler ist. Für die Resonanzfrequenz beträgt der 3-dB-Abstrahlwinkel in der yz-Ebene 35 Grad und in der xz-Ebene 10 Grad. Die Richtcharakteristik ist frequenzabhängig.

Gesamte Meßanordnung

In Figur 1 sind drei Ultraschallwandler USW1, USW2 und USW3 über dem Förderband FB zu sehen. Für jeden Wandler ist eine Sendeendstufe, und ein Empfangsvorverstärker vorhanden. Die Anregung der Ultraschallwandler USW1, USW2 und USW3 und die Auswertung der Empfangssignale erfolgt mit einem Prozessor. Er berechnet die Sendesignale und deren Frequenzmodulation und gibt die errechneten Signale an die Sendeendstufen aus. Die Ultraschallwandler USW1, USW2, USW3 erzeugen entsprechende Ultraschallsignale, die von der Objektszene und von den Wandlern wieder aufgefangen werden. Um eine zeitliche Referenz für den Beginn der Aufzeichnung zu haben, erzeugt der Prozessor einen Triggerimpuls zu Beginn des Sendevorganges. Die an einem A/D-Wandler eingangsseitig anliegenden Empfangssignale werden digitalisiert an den Prozessor zu Signalverarbeitung weitergegeben.

Um ein vollständiges Höhenprofil des Objektes Obj bestimmen zu können, müssen Informationen über die gesamte Breite des Meßstreifens vorliegen, das heißt, alle Wandler müssen ein Sendesignal aussenden, dessen Reflexionen ausgewertet werden. Bei mit gleichen Sendesignalen angesteuerten Wandlern können nicht alle Wandler zugleich senden, da in diesem Fall jeder Empfänger ein Summensignal aus den reflektierten Anteilen der einzelnen Sender aufnimmt und nicht mehr zugeordnet werden kann, welche Signalanteile von welchem Sender stammen. Deswegen kommen je nach zeitlicher Anforderung an die Auflösung verschiedene Verfahren zur Steuerung des Meßablaufes zur Anwendung.

Soll eine statische Messung vorgenommen oder ein sehr langsam bewegtes Objekt vermessen werden, so genügt es, jeden Sender einzeln nacheinander anzuregen. Um schneller bewegte Objekte zu erfassen, sollten andere Verfahren zur Anwendung kommen, die es erlauben, in weniger Zyklen parallel die gesamce Situation zeilenweise zu erfassen. Dazu müssen die Sendesignale kodiert werden, um beim Empfänger die Anteile wieder trennen zu können. Die Kodierung kann beispielsweise durch Aufteilung auf verschiedene Frequenzbänder erfolgen. Die Trennung am Empfänger erfolgt durch Filterung, oder durch Korrelation mit einem Referenzsignal.

Grundsätzliches Ziel bei allen Verfahren ist es, ein Resultat für jeden möglichen Schallweg zu erhalten, aus dem die Laufzeit und die Intensität des reflektierten Signals bestimmt werden können. Als Ergebnis soll ein möglichst kurzer Impuls erhalten werden, da die Impulsbreite direkt die Ortsauflösung des Systems bestimmt.

Die sequentielle Anregung der Ultraschallwandler ist die einfachste und die mit geringstem Aufwand an Hard- und Software zu realisierende Methode für dieses Sensorsystem. Der Meßvorgang zur Bestimmung aller Signale über die gesamte Meßbreite eines Höhenprofils läuft bei diesem sequentiellen Meßverfahren wie folgt ab. Grundsätzlich sendet zu einer gegebenen Zeit höchstens ein Wandler, beispielsweise als erster Wandler USW1 mit einem später noch genauer beschriebenen Signal. Die Reflexionen der Ultraschallwellen werden von allen drei Wandlern USW1, USW2 und USW3 empfangen, so daß Informationen über die Schallwege vom ersten Wandler USW1 über den reflektierenden Meßbereich zurück zum ersten Wandler USW1 selbst und zu den anderen Wandlern USW2 und USW3 vorliegen. Nach der maximal möglichen Schallaufzeit kann nun der zweite Wandler USW2 auf die gleiche Weise senden und anschließend der dritte Wandler USW3. Die für einen kompletten Meßvorgang benötigte Zeit bestimmt sich also hauptsächlich aus den maximalen Schallaufzeiten und der Länge der Sendesignale.

Bei diesem Meßverfahren ist aufgrund der zeitlichen Abfolge immer eindeutig feststellbar, von welchem Wandler ein empfangenes Ultraschallsignal stammt. Die Sendesignale müssen nicht kodiert werden, sondern können prinzipiell frei gewählt werden. Um den gewünscht kurzen Empfangsimpuls zu erhalten, muß die Anregung des Wandlers möglichst dessen gesamte Übertragungsbandbreite ausnützen. Am einfachsten geschieht dies durch eine kurze Impulsanregung, zum Beispiel durch eine Sinusschwingung bei der Resonanzfrequenz.

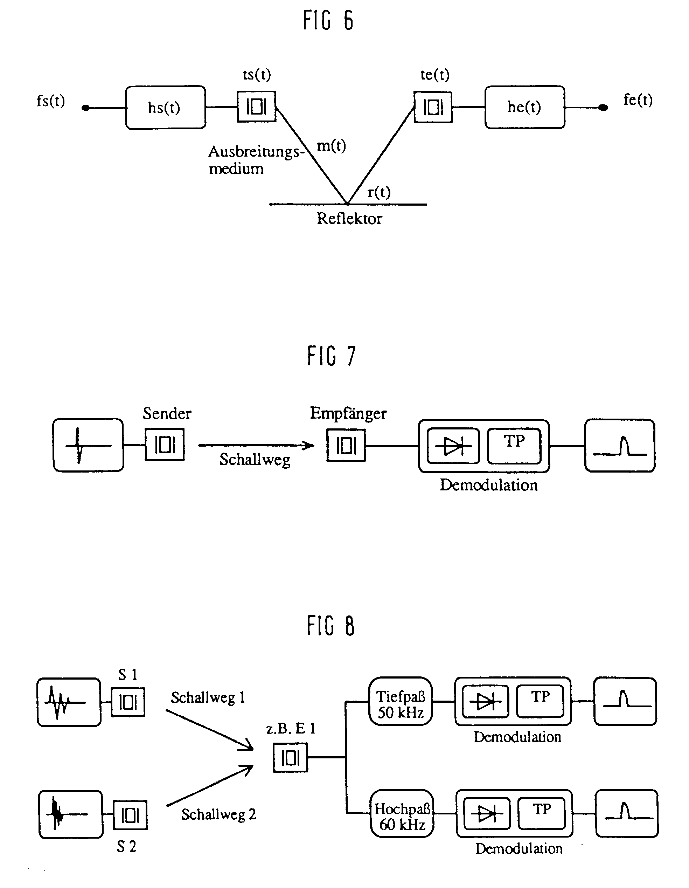

In Figur 6 ist die Übertragungsstrecke des Systems dargestellt.

4

Im Sendezweig durchläuft das elektrische Anregungssignal $f_s(t)$ die durch ihre Impulsantworten gegebenen Übertragungskomponenten Sendeverstärker und Ultraschallwandler. Das erzeugte Ultraschallsignal wird durch die Übertragungsfunktionen des Ausbreitungsmediums m(t) und des Reflektors r(t) beeinflußt. Im Empfangszweig wird das Ultraschallsignal wieder in ein elektrisches Signal gewandelt und verstärkt.

Das Empfangssignal $f_e(t)$ läßt sich durch Faltung der Impulsantworten der einzelnen Übertragungskomponenten berechnen:

$$f_e(t) = f_s(t) * h_s(t) * t_s(t) * m(t) * r(t) * t_e(t) * h_e(t)$$

wobei:

$f_e(t) =$      Empfangssignal
$f_s(t) =$      Anregungssignal
$h_s(t) =$      Übertragungsfunktion des Sendeverstärkers
$t_s(t) =$      Übertragungsfunktion des Sendewandlers
$m(t) =$      Übertragungsfunktion des Ausbreitungsmediums
$r(t) =$      Übertragungsfunktion des Reflektors
$t_e(t) =$      Übertragungsfunktion des Empfangswandlers
$h_e(t) =$      Übertragungsfunktion des Empfangsverstärkers

Faßt man einige Komponenten zusammen, ergibt sich folgende vereinfachte Berechnung:

$$f_e(t) = f_s(t) * h(t) * r(t),$$

mit

$$h(t) = h_s(t) * t_s(t) * m(t) * t_e(t) * h_e(t).$$

Im Frequenzbereich läßt sich das Übertragungsverhalten durch Multiplikation der Übertragungsfunktionen berechnen:

$$F_e(\omega) = F_s(\omega) \cdot H(\omega) \cdot R(\omega)$$

mit

$F_s(\omega) :$      Spektrum des Sendesignals
$F_e(\omega) :$      Spektrum des Empfangssignals
$H(\omega) :$      Übertragungsfunktion der Strecke
$R(\omega) :$      Übertragungsfunktion des Reflektors

Im allgemeinen führt das Übertragungsverhalten der Strecke zu einer Verbreiterung des kurzen Sendeimpulses, so daß die zeitliche Auflösbarkeit des Empfangssignals verschlechtert wird. Durch inverse Anregung kann die Filtereigenschaft der Übertragungsstrecke in begrenztem Umfang kompensiert werden. Im folgenden soll von einer Sinusschwingung als Anregungsfunktion ausgegangen werden. Durch die Übertragungsstrecke wird die Signalform verändert. Dieses Empfangssignal muß vor der eigentlichen Auswertung zur Bestimmung des Höhenprofils noch vorverarbeitet oder demoduliert werden. Dazu wird das Signal zuerst gleichgerichtet und anschließend tiefpaßgefiltert, also eine Art Amplitudendemodulation durchgeführt, und man erhält die Hüllkurve des Signals. In Figur 7 ist der Vorgang für einen Sender und einen Empfänger symbolisch dargestellt.

Bei dem beschriebenen Ausführungsbeispiel System erhält man auf diese Weise einen Impuls von ca. 50µs Länge, was einer Schallstrecke von ca. 17 mm entspricht.

Bevor eine Messung mit dem sequentiellen Meßverfahren erfolgen kann, muß eine Referenzmessung durchgeführt werden. Dazu läuft ein kompletter Meßvorgang ab, ohne daß der Gegenstand, das Objekt, im Meßbereich liegt, das heißt, alle relevanten Ultraschallsignale werden vom Untergrund reflektiert. Mit dieser Messung werden die Referenzschallaufzeiten und die Referenzamplitudenwerte für alle Schallwege ermittelt. Durch Vergleich mit diesen Werten können die Laufzeitdifferenz und der Amplitudenunterschied ermittelt werden.

Filteranalyse

Für Anwendungen mit hoher Anforderung an die Meßrate reicht die Zeit nicht aus, um jeden Wandler nacheinander einzeln senden zu lassen. Deswegen sollen mehrere Wandler gleichzeitig angeregt werden. Um die Einzelanteile aus dem Empfangssignal wieder separieren zu können, müssen die Sendesignale kodiert sein. Bei der Filteranalyse erfolgt diese Kodierung durch Anregung der Wandler auf verschiedenen Frequenzbändern. Beim Empfänger können die Anteile durch Herausfiltern der entsprechenden Spektralanteile wiedergewonnen werden.

Die hier beispielhaft verwendeten Ultraschallwandler haben eine nutzbare Bandbreite von ca. 35 kHz bis 75 kHz. Um die Frequenzbänder durch leicht realisierbare Filter trennen zu können, sollte zwischen den Nutzbändern eine Lücke von ca. 10 kHz Breite gelassen werden. Auf Grund der relativ schmalen Gesamtbandbreite kommt nur eine Trennung in zwei Bereiche in Frage, so daß pro Kanal ein Frequenzband von ca. 15 kHz zur Verfügung steht.

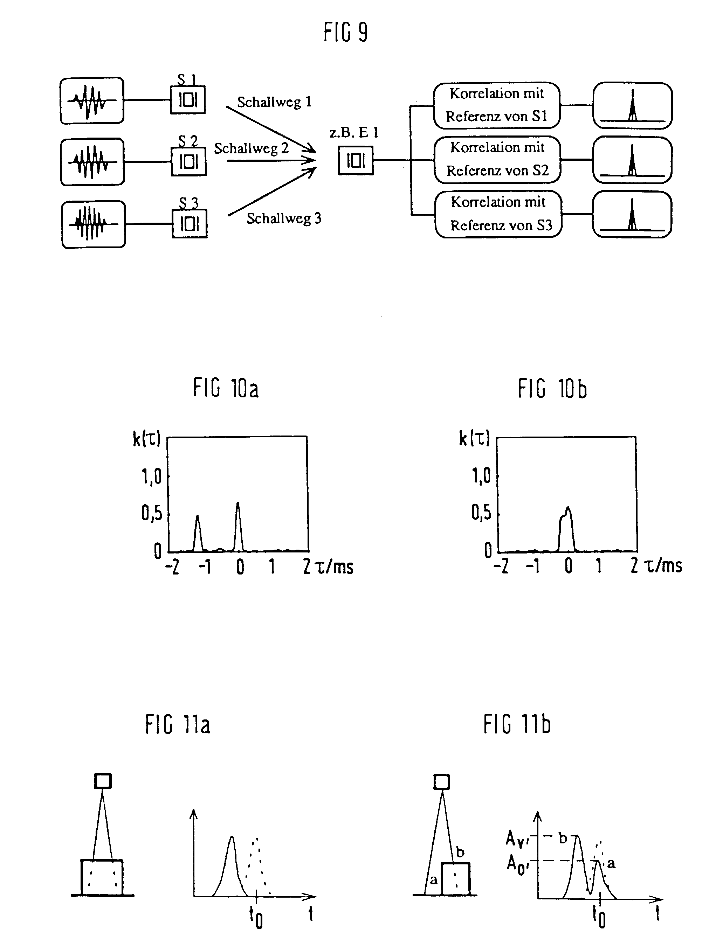

Das Prinzip läßt sich anhand von Figur 8 erläutern. Da zwei Frequenzbänder zur Kodierung verfügbar sind, können zwei Sender oder Sendergruppen S1 und S2 gleichzeitig senden. Ein Summensignal aus beiden Anteilen wird zum Beispiel zu Empfänger EI reflektiert. Das Empfangssignal wird einmal über einen Tiefpaß, einmal über einen Hochpaß geleitet. Der Tiefpaß läßt nur den niederfrequenten Signalanteil, welcher von Sender oder Sendergruppe S1 stammt, passieren, der Hochpaß nur den hochfrequenten Siganlanteil, welcher von Sender oder Sendergruppe S2 stammt. Von beiden Signalanteilen werden nun die Hüllkurven gebildet, so daß man als Ergebnissignale zwei kurze Impulse erhält. Aus deren Position und Amplitude lassen sich nun, genauso wie beim sequentiellen Verfahren, Informationen über die Schallwege gewinnen, mit dem Unterschied, daß jetzt zwei Sender oder Sendergruppen gleichzeitig senden können.

Naturgemäß wird dieses Verfahren eher für eine Anordnung mit geradzahliger Wandleranzahl Anwendung finden. Bei einem Aufbau mit vier Ultraschallwandlern können so alternierend jeweils zwei Wandler senden.

Auch bei diesem Verfahren wird zur Wandleransteuerung eine Art Impulsanregung benutzt. Ausgegangen wird wieder beispielhaft von einer Sinusschwingung, deren Frequenz im gewünschten Band liegt. Dieses Signal wird zusätzlich noch bandpaßgefiltert. Bei den hier durchgeführten Versuchen wurde für das untere Frequenzband eine Sinusschwingung der Frequenz 47 kHz mit einem Tschebyscheff-Bandpaß 6. Ordnung von 35 kHz bis 50 kHz gefiltert. Für das höherfrequente Band wurde eine 63 kHz Sinusschwingung von 60 kHz bis 75 kHz gefiltert.

Um aus einem Empfangssignal die Anteile beider Frequenzbänder zu separieren, muß das Empfangssignal entsprechend gefiltert werden. Da das Signal im dargestellten Fall nur aus zwei Einzelbändern besteht, genügen je Empfänger ein Hoch- und ein Tiefpaß, deren Grenzfrequenzen im ungenutzten Bereich zwischen den Frequenzbändern liegen. Bei diesem Aufbau können die Filter softwaremäßig realisiert werden. Beispielsweise können Tschebyscheff-Filter sechster Ordnung mit der Grenzfrequenz 55 kHz sowohl für den Hoch- als auch für den Tiefpaß verwendet werden.

Nach der Hüllkurvenbildung erhält man für jeden Schallweg wie gewünscht ein pulsförmiges Signal. Da bei diesem Verfahren je Kanal nur knapp die halbe Bandbreite zu Verfügung steht, kann nicht die gleiche Pulsbreite wie beim sequentiellen Verfahren erreicht werden. Die zeitliche Breite des Pulses ist deshalb mit ca. 110 µs mehr als doppelt so groß und entsprechend die zeitlich/örtliche Auflösung über einen Faktor 2 schlechter. Durch die Filterung wird eine Kanaltrennung von mindestens 20 dB erreicht.

Wie auch beim sequentiellen Verfahren muß eine Referenzmessung ohne Objekt vorgenommen werden, um die Referenzlaufzeit bestimmen zu können und um eine Norm für die Amplitudenwerte zu haben, wenn die Ultraschallsignale am Untergrund reflektiert werden.

Korrelationsanalyse

Bei der Filteranalyse wird die nutzbare Bandbreite des Ultraschallwandlers in zwei Bereiche aufgeteilt. Um eine genügende Kanaltrennung zu gewährleisten, muß wegen der nicht unbegrenzt großen Filtersteilheit ein Frequenzbereich zwischen den Bändern ungenutzt bleiben. Im folgenden wird ein Korrelationsverfahren vorgestellt, das es erlaubt, die Bandbreite zu unterteilen, ohne daß ungenutzte Bereiche zur Trennung dazwischen liegen müssen. Deswegen können die Sendesignale auf drei verschiedenen Frequenzbändern kodiert werden, wodurch es ermöglicht wird, beispielsweise drei Wandler gleichzeitig senden zu lassen. Die Separation der Anteile aus dem Empfangssignal erfolgt dann durch Bilden der Kreuzkorrelationsfunktion mit dem entsprechenden Referenzsignal.

Die Kreuzkorrelationsfunktion (KKF) $k_{xy}(t_1,t_t)$ zweier Signale ist das gemittelte Produkt der Amplitudenwerte des Signals $x(t_1)$ zum Zeitpunkt $t_1$ und des Signals $y(t_2)$ zum Zeitpunkt $t_2$. Sind x und y stationäre Prozesse, so hängt $k_{xy}(t_1,t_2)$ nur von der Zeitdifferenz $\tau = t_2 - t_1$ ab.

EP 0 748 454 B1

$$k_{xy}(\tau) = \overline{x(t)^{\bullet} \cdot y(t + \tau)} = \lim_{T \to \infty} \frac{1}{2 \cdot T} \int_{-T}^{T} x(t)^{\bullet} \cdot y(t + \tau) \, dt$$

( $^{\bullet}$ = konjugiert komplex )

Anschaulich ausgedrückt gibt die KKF die Ähnlichkeit zweier Signale x und y in Abhängigkeit ihrer zeitlichen Verschiebung $\tau$ an. Sind zwei Prozesse unabhängig voneinander, so ist ihre KKF identisch null. Dies trifft zum Beispiel auf zwei getrennte Rauschprozesse zu. Dagegen nimmt die KKF ihren maximalen Wert an, wenn die zwei Signale bis auf einen konstanten Faktor identisch sind. Sind diese beiden Signale nicht zeitverschoben, so tritt das Maximum der KKF an der Stelle $\tau = 0$ auf, andernfalls erfolgt eine Verschiebung des Maximums um die gleiche Zeit, um welche auch die beiden Signale zueinander verschoben sind. Die Korrelation zweier identischer nicht zeitverschobener Prozesse wird Autokorrelationsfunktion (AKF) genannt.

Die KKF kann auch über das Kreuzleistungsdichtespektrum im Frequenzbereich berechnet werden. Dies ist insbesondere für die numerische Berechnung der Korrelation wichtig, da die KKF über den Frequenzbereich wesentlich schneller berechnet werden kann als im Zeitbereich. Dazu können die zwei zu korrelierenden Signale und die KKF mittels der Fast-Fouriertransformation in den Frequenzbereich und zurück transformiert werden.

Die Korrespondenzen zwischen den Zeitsignalen und ihren Spektren werden wie folgt dargestellt:

x(t)       o—•       X(j$\omega$)
y(t)       o—•       Y(j$\omega$)
$k_{xy}(\tau)$       o—•       $S_{xy}$(j$\omega$)

wobei $S_{xy}$(j$\omega$) als Kreuzleistungsdichtespektrum bezeichnet wird. Aus den Spektren der Ausgangssignale X(j$\omega$) und Y(j$\omega$) läßt sich das Kreuzleistungsdichtespektrum durch Multiplikation berechnen:

$$s_{xy}(j\omega) = \lim_{T \to \infty} \frac{1}{2T} \cdot X(j\omega) \cdot Y^{*}(j\omega)$$

Durch Rücktransformation des Kreuzleistungsdichtespektrums in den Zeitbereich erhält man die KKF.

Bei dem Korrelationsmeßverfahren wird die Kreuzkorrelation dazu benutzt, die gesuchten Signalanteile aus dem vermischten Empfangssignal herauszuziehen. Dazu müssen die Sendesignale, wie schon bei der Filteranalyse, kodiert werden. Die Kodierung erfolgt zum einen wieder durch Aufteilung in verschiedene Frequenzbänder. Diese können hierbei direkt aneinander grenzen, so daß die gesamte Bandbreite des Ultraschallwandlers ausgenutzt wird. Da durch die Kreuzkorrelation nicht Frequenzen gemessen werden, sondern nach Ähnlichkeiten mit einem Referenzsignal gesucht wird, muß das Anregungssignal zeitlich ausgedehnter sein. Nur so erreicht man in der Kreuzkorrelationsfunktion ein ausreichend deutliches und kurzes, pulsförmiges Maximum. Als Sendesignale werden deswegen sogenannte Chirps verwendet. Das sind Folgen von Sinusschwingungen, deren Frequenzen mit der Zeit verändert werden. Bei dieser Anregungsform wird durch die längere Dauer des Sendesignals außerdem wesentlich mehr Energie übertragen als bei Impulsanregung. Dadurch verbessert sich der Signal-Rausch-Abstand, was aber hier nicht ins Gewicht fällt, da dieser auch bei den anderen Empfangssignal-Auswerteverfahren unter der erreichten Kanaltrennung von 20 dB liegt. Der Signalverlauf eines Chirps kann mit folgender Formel berechnet werden:

$$s(t) = S_0 \left( \sin \left( 2\pi \cdot \left( f_0 - \frac{\Delta f}{2} \right) \cdot t + \frac{\Delta f}{2 \cdot T} \cdot t^2 \right) \right)$$

wobei $f_0$ die Mittenfrequenz, $\Delta f$ die Bandbreite und T die Dauer des Chirps ist.

Als Anregungssignale werden Chirps mit Mittenfrequenzen von 42 kHz, 53 kHz und 64 kHz und einer Bandbreite von 15 kHz verwendet. Die Autokorrelationsfunktion hat für alle drei Chirps den gleichen Verlauf. Sie zeigt ein deutliches Maximum an der Stelle t = 0, dessen Amplitude um mehr als 20 dB über denen der Nebenmaxima liegt. Die Amplitudenwerte der Kreuzkorrelationen zwischen den drei Signalen liegen ebenfalls um mindestens 20 dB unter dem Maximalwert der Autokorrelierten. Liegt also der Signalverlauf einer dieser Chirps vor, kann durch Korrelation mit den drei Referenzchirps ermittelt werden, um welchen es sich handelt. Wird ein Chirp mit dem gleichen, aber zeitversetzten Chirp korreliert, so liegt streng genommen keine Autokorrelation vor, das Signal hat aber den gleichen, nur auch um die gleiche Zeit verschobenen Verlauf. Um den Zeitversatz genau bestimmen zu können, sollte das Hauptmaximum

7

der Autokorrelation möglichst schmal sein. Ähnlich wie bei den Impulsanregungsverfahren hängt diese Breite von der Bandbreite des Signals ab. Grundsätzlich läßt sich sagen, daß die Bandbreite des Chirps umgekehrt proportional zur zeitlichen Breite des Maximums ist.

Die Figur 9 zeigt den Empfang und die Verarbeitung des Signals für einen Empfänger. S1 und EI sind beide der gleiche Ultraschallwandler, der einmal als Sender, einmal als Empfänger arbeitet. Die drei Ultraschallwandler USW1, USW2 und USW3 werden mit den durch beispielsweise einer Simulation ermittelten Chirps angeregt. Um eine Messung durchführen zu können, müssen zuerst die Referenzsignale ermittelt werden, ohne daß das Objekt im Meßbereich liegt, also alle Signale vom Untergrund reflektiert werden. Hierzu sendet zuerst nur der Sender S1 den ihm zugeordneten Chirp. Alle drei Wandler USW1, USW2 und USW3 empfangen das reflektierte Signal. Für jeden der drei Empfänger wird dieses Signal nun eigens als Referenzsignal von Sender S1 abgespeichert. Dieser Vorgang wird für die Sender S2 und S3 wiederholt, so daß für jeden Empfangszweig drei Referenzsignale von den drei Sendern S1, S2 und S3 vorliegen. Anschließend wird ein weiterer Meßzyklus durchgeführt, während dessen auch noch kein Objekt im Meßbereich liegen darf. Dazu senden jetzt alle Sender zeitgleich ihr Sendesignal. Jeder Empfänger nimmt ein Summensignal aus den Reflexionen der drei Ultraschallsignale auf. Wie in Figur 9 für den Empfänger EI zu sehen ist, wird dieses Summensignal mit den zuvor gespeicherten Referenzen kreuzkorreliert. Durch Korrelation mit dem Anteil, der der Referenz entspricht, entsteht ein Maximum in der KKF. Die anderen Signalanteile werden um mindestens 20 dB unterdrückt. Da auch jetzt alle Signale vom Untergrund reflektiert wurden, liegt das Maximum genau an der Stelle t = 0. Die Amplitude des Maximums dient als Norm für die zukünftigen Messungen. Nach Ablauf dieser Vorgänge kann mit den eigentlichen Messungen zur Objekterkennung begonnen werden. Der Ablauf ist im Prinzip der gleiche wie bei der Referenzmessung. Das heißt, auch jetzt senden alle Wandler gleichzeitig. Die Reflexion der Signale kann aber jetzt nicht nur am Untergrund erfolgen sondern auch am Objekt, so daß Teile der Signale früher zu den Wandlern zurückkommen. In den Ergebnissen der Korrelationen spiegelt sich dies durch Verschiebung der Maxima um die entsprechende Zeit wieder. Aus der Verschiebung der Maxima und den Amplituden werden die Informationen über das Objekt gewonnen.

Auswertung

Im folgenden wird das Auswertungverfahren beschrieben, d.h. wie die Informationen, die für jeden Schallweg zwischen den einzelnen Wandlern vorliegen, zusammenzufassen sind und daraus das eigentliche Meßergebnis, nämlich die Position des Objekts Obj auf dem Förderband FB, zu bestimmen ist.

Das Auswerteverfahren läßt sich im wesentlichen in drei Teile gliedern. Zuerst müssen aus den Ergebnissen der Anregungsverfahren die zur weiteren Auswertung nötigen Informationen, wie die Laufzeit und die Amplituden der Ultraschallsignale für die einzelnen Schallwege, bestimmt werden. Im zweiten Schritt wird aus diesen Daten das Höhenprofil des Objekts Obj quer zur Förderrichtung bestimmt. Diese Auswertung wird zum Teil mit Hilfe einer Fuzzy-Logik vorgenommen. Der letzte Schritt ist die Bestimmung der Position des Objekts in Förderrichtung.

Vorverarbeitung der Empfangssignale

Für jeden Schallweg liegt ein Signalverlauf vor, der zu bestimmten Zeitpunkten, die die Schallaufzeiten für die entsprechenden Wege widerspiegeln, einen kurzen Puls aufweist. Durch je nach Verfahren unterschiedliche Referenzmessungen werden die maximalen Laufzeiten ermittelt. Diese liegen vor, wenn die Ultraschallwelle am Untergrund reflektiert wird. Mit diesen Zeitpunkten als Nullpunkte (Referenzpunkte) werden die Zeitachsen der Signale skaliert. So unterscheiden sich die Signalverläufe der Ergebnisse der einzelnen Meßverfahren nur noch durch die unterschiedliche Breite der Pulse. Da die für die Objekthöhenbestimmung nötigen Laufzeitunterschiede aus den Positionen der Pulse bestimmt werden, bestimmt sich die mögliche zeitliche Auflösung aus der Breite und der Form der Pulse. Bei der Korrelationsanalyse liegt die Breite bei ca. 125 us, was einer Strecke von 43 mm entspricht. Prinzipiell können die Laufzeiten über ein Verfahren, das die lokalen Maxima einer Funktion sucht, mit einer Genauigkeit von mindestens $\pm$ 20 us bestimmt werden. Dies entspricht einer Schallwegauflösung von $\pm$ 7 mm. Ergebnisfunktionen können, wie in Figur 10a und 10b gezeigt, aussehen. Es ist deutlich zu erkennen, daß sich zwei Pulse überlappen. Um eine gute Qualität der Auswertung sicherzustellen, kommt dem Verfahren zur Extraktion der Merkmale Amplitude und Position aus den Empfangssignalen eine große Bedeutung zu.

Wie schon bei den Meßverfahren wird die Signalverarbeitung digital vorgenommen. Im ersten Schritt wird eine Glättung des verrauschten Funktionsverlaufs durchgeführt. Dazu wird für jeden Punkt ein linearer Mittelwert aus einer bestimmten, durch Versuche ermittelte Anzahl von benachbarten Punkten berechnet:

$$\bar{a}_n = \frac{a_{n-N} \cdots + a_{n-1} + a_n + a_{n+1} \cdots + a_{n+N}}{2N + 1},$$

wobei

$a_n$ der Wert des Abtastsignals an der Stelle n und
2N+1 die Anzahl der Abtastpunkte ist.

Die eigentliche Bestimmung der Maxima wird nicht auf direktem Weg aus dem Zeitsignal vorgenommen, sondern es wird zuerst die Ableitung der Funktion berechnet. Diese wird hier über den Differenzenquotienten nach der Formel

$$a'_n = \frac{a_{n-N} - a_{n+N}}{2N}$$

bestimmt.

Durch die Berechnung der Ableitung kann die Position eines Maximums eingegrenzt werden, da die Ableitung an dessen vorderen Flanke ein ausgeprägtes lokales Maximum und an der fallenden Flanke ein Minimum aufweist. Auch bei zwei ineinander übergehenden Pulsen sind die Extrema noch auswertbar.

Es werden jeweils paarweise lokale Maxima und die darauffolgenden Minima gesucht. Dann werden die zwei Paare mit den größten Amplitudendifferenzen ausgewählt. Jeweils zwischen den Positionen eines Maximums und eines Minimums der Ableitung kann nun in der Zeitfunktion ein Puls bestimmt werden. Dazu wird zwischen diesen Punkten in der Zeitfunktion ein lokales Maximum gesucht. Wird eines gefunden, stehen Position und Amplitudenwert für dieses fest. Wenn kein lokales Maximum vorhanden ist, wie im obigen Beispiel für den linken der ineinander verlaufenen Pulse, so wird der Amplitudenwert und die Position genau in der Mitte des Maximum-Minimum-Paars der Ableitung als Ergebnis betrachtet.

Natürlich werden nur Amplitudenwerte, die größer als ein bestimmter Grenzwert sind (z.B. größer als die Kanaltrennung), als gültiges Ergebnis angesehen. Auf diese Weise erhält man für jeden Schallweg die Position und die Amplitude von ein oder zwei Maxima des Signalverlaufs. Aus diesen Werten wird in der folgenden Auswertung das Höhenprofil des Meßstreifens unter den Sensoren bestimmt.

Bestimmung des Höhenprofils

Für die Bestimmung des Höhenprofils wird davon ausgegangen, daß das Objekt einen rechteckigen Querschnitt hat. Dadurch reduziert sich das Problem auf das Ermitteln der Höhe und der linken und rechten Kante des Objektquerschnitts. Die Bestimmung der Höhe erfolgt aus der Laufzeitdifferenz von Reflexion am Untergrund und am Objekt.

Liegt ein Objekt im Meßbereich, wird ein Teil der Ultraschallsignale nicht am Untergrund reflektiert sondern vom Objekt. Dadurch verschieben sich ein oder mehrere Pulse in den Empfangsfunktionen, da die Laufzeit dieser Signale kürzer wird.

Die zeitliche Verschiebung $\Delta t$ des Pulses gegenüber der Referenzposition wird bei der Signalvorverarbeitung bestimmt. Mit der bekannten Schallgeschwindigkeit in Luft c kann daraus die Höhe h des Objekts berechnet werden.

$$h = \frac{c \cdot \Delta t}{2}$$

Genau genommen gilt diese Formel nur für die Schallwege senkrecht zum Untergrund. Bei den Schallwegen zwischen benachbarten Wandlern tritt aufgrund des unterschiedlichen Abstrahlwinkels ein Fehler auf, der mit größerer Objekthöhe auch größer wird. Wenn möglich, sollten deshalb für die Höhenbestimmung die Signale der senkrechten Schallwege, das heißt, die Schallwege, bei denen der gleiche Wandler als Sender und Empfänger dient, ausgewertet werden. Weisen diese Signale keine Laufzeitverschiebung auf, müssen die Signale der nicht senkrecht verlaufenden Schallwege zwischen benachbarten Wandlern herangezogen werden. Aus den geometrischen Verhältnissen ergibt sich dann folgende Formel zur Berechnung der Höhe:

$$h = h_0 - \frac{1}{2} \sqrt{(c \cdot \Delta t)^2 - d_0{}^2},$$

wobei $h_0$ die Höhe der Wandler über der Grundfläche, der Untergrund, und $d_0$ der Abstand benachbarter Wandler ist. Meist ist die Formel

$$h = \frac{c \cdot \Delta t}{2}$$

ausreichend, da der auftretende Fehler relativ gering ist. Beispielsweise beträgt der auftretende Fehler bei der hier verwendeten Anordnung (Wandlerhöhe 80 cm, Wandlerabstand 26 cm, maximal zulässige Objekthöhe 40 cm) maximal 1,3 cm. Dieser Fehler ist im Vergleich zur erreichten lateralen Auflösung dieses Meßsystems gering.

Bestimmung der Kantenpositionen

Die Auflösung von Ultraschallsystemen in lateraler Richtung ist bei weitem nicht so gut ist wie die axiale Auflösung. Deswegen ist es hierfür vorteilhaft mit Fuzzy-Logik zu arbeiten.

Prinzipiell ist es nur mit einem Mehrwandlersystem oder einem bewegten Wandler möglich, laterale Strukturen zu erfassen. Deswegen werden hier die Empfangssignale aller Wandler genutzt. Die Verknüpfung dieser Daten und die Bestimmung der Ergebnisse daraus erfolgt mittels Fuzzy-Logik.

Wie schon erläutert, werden bei der Signalvorverarbeitung die Amplituden und die Laufzeiten der Ultraschallsignale für die einzelnen Schallwege berechnet. Die genauen Laufzeiten werden nur für die Höhenberechnung gebraucht. Für die Kantenbestimmung dagegen werden die Amplituden der Maxima im Empfangssignal verwertet. Außerdem muß bekannt sein, ob ein Maximum von einer Reflexion am Objekt stammt, also zur Referenz zeitlich verschoben ist, oder er von einer Reflexion am Untergrund kommt.

Um das Prinzip der Auswertung deutlich zu machen, sind in Figur 11a und 11b die möglichen Verläufe der Empfangssignale und die dazugehörige Meßsituation dargestellt. Die Beispiele geben die Situation der senkrechten Schallwege wieder. Näherungsweise gilt das im folgenden Gesagte aber auch für die Schallwege zwischen benachbarten Wandlern. In den bisherigen Darstellungen wurden die Schallwege als Linien dargestellt, und die Reflexion erfolgte nach dem Reflexionsgesetz Einfallswinkel gleich Ausfallswinkel. Tatsächlich aber werden die Schallwellen in einem breiteren Bereich um die dargestellte Mittellinie zum Empfänger zurückreflektiert.

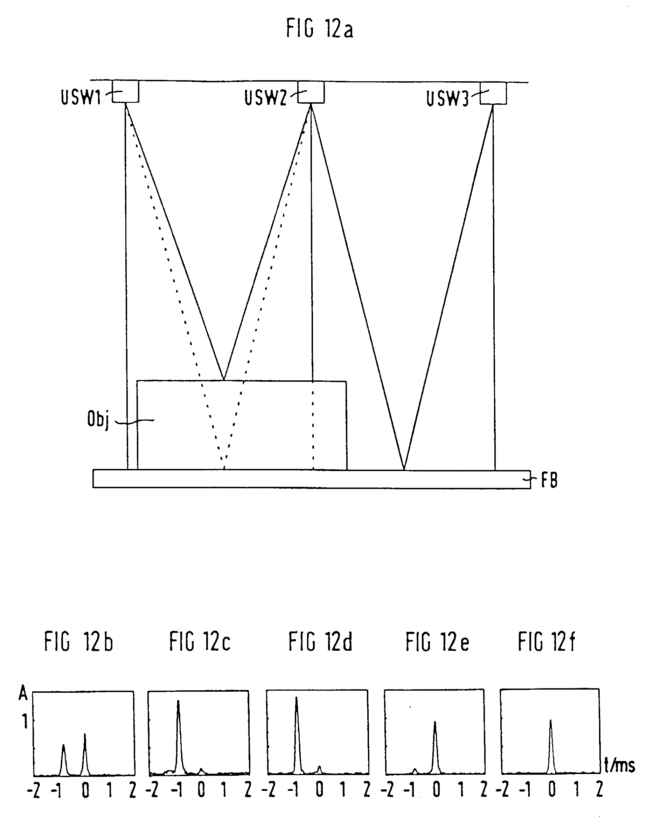

In Figur 11a und 11b sind zwei Möglichkeiten der Reflexion dargestellt. Die gestrichelten Linien geben die Situation bei Reflexion am Untergrund wieder. Das Ultraschallsignal wird komplett von der Grundfläche reflektiert und das Empfangssignal entspricht somit dem der Referenzmessung, das heißt, die Position des Maximums liegt bei t = 0 und die normierte Amplitude ist gleich 1. Die Situation ist ähnlich, wenn die Ultraschallwelle komplett vom Objekt Obj reflektiert wird. In diesem Fall ist das Maximum im Empfangssignal um die entsprechende Laufzeit verschoben. Die Amplitude kann je nach Material, Höhe und Oberflächenwölbung des Objekts Obj unterschiedliche Werte annehmen. Wenn eine Kante des Objekts Obj im Reflexionsbereich liegt, wird ein Teil des Ultraschallsignals am Untergrund, ein Teil am Objekt Obj reflektiert und im Empfangssignal treten zwei Maxima auf. Aus deren Amplitudenwerten und ihrem Verhältnis zueinander kann die genaue Position der Kante bestimmt werden. Nach der Erläuterung des Prinzips soll anhand eines konkreten Beispiels das Auswertungsverfahren näher beschrieben werden. In Figur 12 ist eine Meßsituation dargestellt, bei der alle oben beschriebenen Reflexionsmöglichkeiten vorkommen. In Figur 12 b - f sind die zur Auswertung benötigten, mit dem Korrelationsverfahren ermittelten Signalverläufe zu sehen. Es werden nur die Signale von fünf der neun möglichen Schallwege verwendet, da die anderen Signale nur noch redundante Information enthalten. Aus den Amplitudenwerten der Maxima dieser Signalverläufe können jetzt die Positionen der Kanten auf folgende Weise bestimmt werden. Der Signalverlauf ① weist zwei Maxima auf, das heißt, im Bereich unter Wandler USW1 muß eine Kante des Objekts Obj liegen. Das Ergebnis für Schallweg ② zeigt nur eine Reflexion vom Objekt Obj. Daraus kann gefolgert werden, daß unter Wandler USW1 die linke Kante des Gegenstands liegen muß. Die genaue Position kann aus den Amplituden der beiden Maxima von Signalverlauf ① ermittelt werden. Die Amplitude des von der Objektreflexion stammenden Maximums sollte bei der Positionsberechnung eine untergeordnete Rolle spielen, da sie sehr stark vom Material, der Oberflächenwölbung und der Höhe des Objekts abhängt. Eine größere Aussagekraft hat dagegen die Höhe des Maximums von der Reflexion am Untergrund. Wie schon erwähnt, wird nicht nur ein linienförmiger Schallstrahl zum Empfänger zurückreflektiert, sondern es trägt ein relativ breiter Bereich um die Mittellinie zur Reflexion bei. Bei den hier vorliegenden Abmessungen der Anordnung hat dieser Bereich ein Breite von ca. ± 5 cm. Liegt in diesem Bereich kein Objekt, so ist die normierte Amplitude des Maximums ungefähr 1. Liegt das Objekt dagegen in diesem Abschnitt, so ist die Amplitude entsprechend geringer, oder sie ist gleich 0, wenn der Gegenstand den Bereich vollständig abdeckt. Zwischen den Extremwerten der Amplitude kann ein monotoner Verlauf approximiert werden, je nachdem welcher Anteil des Schallbündels vom Untergrund reflektiert wird. Nachdem die Position der linken Kante im Bereich von Schallweg ① gefunden wurde, werden die weiteren Signalverläufe betrachtet, um die Lage der rechten Kante zu bestimmen. Die Verläufe für die Schallwege ② und ③ zeigen eine vollständige Reflexion am Gegenstand, die Kante muß also rechts davon liegen. Bei den Schallwegen ④ und ⑤ erfolgt dagegen die Reflexion nur am Untergrund. Der Erfassungsbereich eines Schallwegs beträgt am Untergrund ca. ± 4 cm. Aus den Signalverläufen ③ und ④ kann also geschlossen werden, daß sich die rechte Kante mindestens 4 cm rechts von der Mittellinie von Schallweg ③ und mindestens 4 cm links von Mittellinie von Schallweg ④ befindet. Ist der Abstand der Mittellinien größer als 8 cm, kann die Position der Kante demnach nicht mehr genau bestimmt, sondern nur der Bereich angegeben werden. Die oben beschriebene Signalauswertung kann auf verschiedene Arten realisiert werden. Prinzipiell kann ein Verfahren, basierend auf konventioneller Logik, zusammen mit Vorschriften zur Berechnung der genauen Kantenpositionen aus den Amplitudenwerten, erstellt werden.

Aus der Amplitude der Referenzmessung ohne Objekt und der Amplitude der nachfolgenden Messung mit Objekt last sich ein Verdeckungsgrad $V_1$ bestimmen:

$$V_1 = \frac{A_{0ref} - A_{0'}}{A_{0ref}} = 1 - A_0$$

wobei:

$V_1$ = Verdeckungsgrad
$A_{0ref}$ = Amplitude des Maximums des Echosignals bei der Referenzmessung (nur Echo vom Untergrund)
$A_{0'}$ = Amplitude des Maximums des Echosignals vom Untergrund bei der Messung mit Objekt

$$A_0 = \frac{A_{0'}}{A_{0ref}}$$

wobei $A_0$ die normierte Untergrundechoamplitude ist.

Der Verdeckungsgrad ist ein Maß für die Verdeckung des Untergrunds, des Förderbands, durch das Objekt. Je größer der Verdeckungsgrad ist, desto mehr verdeckt das Objekt den Untergrund.

Ein zweiter Verdeckungsgrad $V_2$ ist aus den Amplituden der im empfangenen Echo auftretenden Maxima bestimmbar. Dazu wird die Amplitude $A_{V'}$ mit der Amplitude $A_{0'}$ (vgl. Figur 11b) ins Verhältnis gesetzt:

$$V_2 = \frac{A_{V'}}{A_{0'} + A_{V'}} = \frac{A_V}{A_0 + A_V}$$

$$A_0 = \frac{A_{0'}}{A_{0ref}}$$

$$A_V = \frac{A_{V'}}{A_{0ref}}$$

wobei:

$V_2$ = zweiter Verdeckungsgrad
$A_{V'}$ = Amplitude des Maximums des Echosignals bei der Messung mit Objekt vor $t_0$
$A_{0'}$ = Amplitude des Maximums des Echosignals bei der Messung mit Objekt bei $t_0$

Beide Verdeckungsgrade $V_1$ und $V_2$ können miteinander zu einem dritten Verdeckungsgrad $V_3$ verknüpft werden:

$$V_3 = \alpha \cdot V_1 + \beta \cdot V_2$$

wobei:

$\alpha$ = erster Gewichtungsfaktor
$\beta$ = zweiter Gewichtungsfaktor

Bei glattem, gleichmäßig gut reflektierendem Untergrund und Objekten mit einer nicht spezifizierten Oberflächengeometrie, sollte der erste Gewichtungsfaktor $\alpha$ größer als der zweite Gewichtungsfaktor $\beta$ gewählt werden, da im Gegensatz zur Reflektivität des Objekts die Reflektivität des Untergrunds aus der Referenzmessung bekannt ist und

daher der Verdeckungsgrad $V_1$ aus diesem Grund den verläßlicheren Wert liefert. Neben der Reflektivität des Untergrunds hängt die Größe der Gewichtungsfaktoren von der Form der zu detektierenden Objekte und vom Aufbau der Meßanordnung ab. Sollen mit dem vorliegenden System beispielsweise quaderförmige, gut reflektierende Objekte auf einem ebenen Förderband detektiert werden, so sind $\alpha$ und $\beta$ vorzugsweise zu 0,5 zu wählen.

Eine weitere Möglichkeit die Verdeckungsgrade $V_1$ und $V_2$ zu verknüpfen kann dadurch erfolgen, daß jeweils der größere der beiden Verdeckungsgrade den resultierenden Verdeckungsgrad $V_4$ liefert:

$$V_4 = \text{Max}\,(V_1,\,V_2)$$

Insbesondere bei Objekten mit nicht determinierter Oberflächengeometrie stellt der Verdeckungsgrad $V_4$ eine günstige Verknüpfung dar.

Der Verdeckungsgrad wird für jedes Echosignal das empfangen wird gesondert bestimmt. Aus dem Vergleich der Werte der Verdeckungsgrade kann auf die Kanten des Objekts geschlossen werden. Ist beispielsweise der am Wandler USW1 ermittelte Verdeckungsgrad kleiner als der am Wandler USW2 bestimmte, so liegt eine linke Objektkante vor, vgl. Fig. 12. Ist der am Wandler USW2 ermittelte Verdeckungsgrad größer als der am Wandler USW3 bestimmte, so liegt eine rechte Objektkante vor. Einfach an verschiedene Situationen anpaßbar ist eine Realisierung mit Fuzzy-Logik. Gegenüber der direkten arithmetischen Verknüpfung besteht hier der Vorteil darin, daß die Eingangsgrößen, $A_0$ und $A_V$ durch ein Fuzzy-Regelwerk sehr flexibel und situationsabhängig miteinander verknüpft werden können, so daß sich auch nichtlineare Zusammenhänge relativ einfach beschreiben lassen. Außerdem sind Fuzzy-Verfahren meist fehlertoleranter, d.h. auftretende Störungen, wie sie hier zum Beispiel durch Luftströmungen hervorgerufen werden könnten, werden richtiger beurteilt.

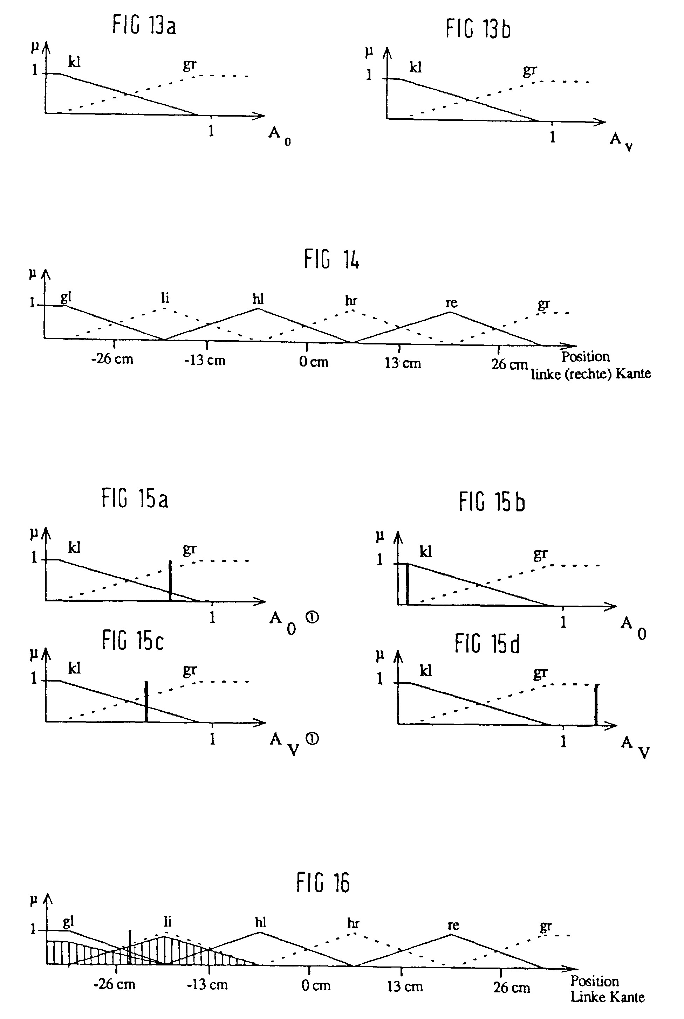

Der erste Schritt bei der Erstellung einer Fuzzy-Anwendung ist die Festlegung der benötigten Eingangs- und Ausgangsvariablen sowie der Zugehörigkeitsfunktionen zur Fuzzifizierung und Defuzzifizierung. Als Eingangsvariablen werden die Amplituden der Reflexionsmaxima der fünf relevanten Schallwege verwendet. Die normierte Amplitude des Maximums von der Untergrundreflexion wird $A_0$, die normierte Amplitude des verschobenen Maximums $A_V$ genannt. Die Position der Kante hängt annähernd linear von der Amplitude $A_0$ ab. Um diese Abhängigkeit durch die Fuzzy-Inferenz in das Ergebnis einfließen zu lassen, muß die Variable entweder in relativ viele Zugehörigkeitsklassen oder in nur zwei mit entsprechendem linearen Übergang eingeteilt werden. Da viele Klassen zu einer hohen Regelzahl führen, wurde die zweite Möglichkeit gewählt. Figur 13 zeigt die gewählten Zugehörigkeitsfunktionen $\mu(A_0)$ und $\mu(A_V)$, die die Werte in die Klassen klein (kl) und groß (gr) einteilt.

Der lineare Übergang beginnt bei einer Amplitude von 0,1 und endet bei 0,9, um den Einfluß von Amplitudenschwankungen durch Störungen zu vermeiden. Um erkennen zu können, zu welchem Schallweg die jeweilige Variable gehört, wird die Nummer in Klammern angegeben. Als Eingangsvariablen werden also folgende 10 Werte an die Fuzzy-Auswertung übergeben:

$A_0$ (①), $A_V$ (①), $A_0$ (②), $A_V$ (②), $A_0$ (③), $A_V$ (③), $A_0$ (④), $A_V$ (④), $A_0$ (⑤), $A_V$ (⑤).

Als Ausgangsvariablen werden die Positionen der linken und der rechten Kanten verwendet. Die Einteilung in Klassen muß an die Abmessungen des Meßsystems angepaßt werden. Hier befinden sich die Wandler an den Koordinaten -26 cm, 0 cm und +26 cm über dem erfaßbaren Meßstreifen von -30 cm bis +30 cm Ausdehnung. Die Breite des Meßstreifens wird in sechs Zugehörigkeitsklassen aufgeteilt, die mit den folgenden linguistischen Variablennamen bezeichnet werden:

ganz links (gl), links (li), halb links (hl), halb rechts (hr), rechts (re), ganz rechts (gr).

Die Schnittpunkte der Zugehörigkeitsfunktionen liegen dabei jeweils an den Reflexionspunkten der Schallwege.

Die Fuzzy-Inferenz, die die Ausgangs- mit den Eingangsvariablen verknüpft, wird durch eine Anzahl von Regeln beschrieben. Dazu wird die oben beschriebene Vorgehensweise zur Bestimmung der Kantenpositionen in Wenn-Dann-Vorschriften umgesetzt. Aufgrund der geringen Anzahl von Klassen bei den Eingangsvariablen gestaltet sich der Regelsatz sehr übersichtlich.

| Regeln linke Kante: | | | | |
|---|---|---|---|---|
| Regel 1 | WENN | $A_0$①klein | ODER | $A_V$①groß |
| | DANN | Linke Kante | ganz links (gl) | |
| Regel 2 | WENN | {($A_0$①groß | UND | $A_V$①klein) |
| | ODER | $A_0$①groß} | | |
| | UND | ($A_0$②klein | ODER | $A_V$②groß) |

(fortgesetzt)

---

**Regeln linke Kante:**

|  | DANN | Linke Kante | links (li) |

Regel 3
WENN $\{($ $A_0$①groß UND $A_V$②klein$)$
ODER $A_0$②groß$\}$
UND $($ $A_0$③klein ODER $A_V$③groß$)$
DANN Linke Kante halb links (hl)

Regel 4
WENN $\{($ $A_0$③groß UND $A_V$③klein$)$
ODER $A_0$③groß$\}$
UND $($ $A_0$④klein ODER $AV$④groß$)$
DANN Linke Kante halb rechts (hr)

Regel 5
WENN $\{($ $A_0$④groß UND $A_V$④klein$)$
ODER $A_0$④groß$\}$
UND $($ $A_0$⑤klein ODER $A_V$⑤groß$)$
DANN Linke Kante rechts (re)

---

**Regeln rechte Kante:**

Regel 6
WENN $A_0$⑤klein ODER $A_V$⑤groß
DANN Rechte Kante ganz rechts (gr)

Regel 7
WENN $\{($ $A_0$⑤groß UND $A_V$⑤klein$)$
ODER $A_0$⑤groß$\}$
UND $($ $A_0$④klein ODER $A_V$④groß$)$
DANN Rechte Kante rechts (re)

Regel 8
WENN $\{($ $A_0$④groß UND $A_V$④klein$)$
ODER $A_0$④groß$\}$
UND $($ $A_0$③klein ODER $A_V$③groß$)$
DANN Rechte Kante halb rechts (hr)

Regel 9
WENN $\{($ $A_0$③groß UND $A_V$③klein$)$
ODER $A_0$③groß$\}$
UND $($ $A_0$②klein ODER $A_V$②groß$)$
DANN Rechte Kante halb links (hl)

Regel 10
WENN $\{($ $A_0$②groß UND $A_V$②klein$)$
ODER $A_0$②groß$\}$
UND $($ $A_0$①klein ODER $A_V$①groß$)$
DANN Rechte Kante links (li)

---

Anhand der oben vorgestellten Beispielsituation soll die Funktionsweise der Fuzzy-Verarbeitung beschrieben werden. Zur Detektion der linken Kante des Objekts Objsind in diesem Fall nur die Reflexionen der Schallwege① und② relevant.

Die Vorverarbeitung der Signale liefert im Beispiel die normierten Amplitudenwerte:

$A_0$ (①) = 0,74; $A_V$ (①) = 0,58; $A_0$ (②) = 0,08; $A_V$ (②) = 1,42;

Diese Werte und die der anderen Schallwege, werden als Eingangsvariablen an die Fuzzy-Logik übergeben. Im ersten Schritt wird die Fuzzifizierung der Variablen durchgeführt, das heißt, die Werte werden nach der beschriebenen Zugehörigkeitsfunktion den Klassen 'klein' und 'groß' zugeordnet.

Die zugehörigkeiten $\mu$ der Variablen können aus den Figuren 13 und 14 entnommen bzw. berechnet werden. Zum Beispiel gehört der Wert der Variable $A_0$ ① zu 80% der Klasse 'groß' und zu 20% der Klasse 'klein' an. Die Zugehörigkeiten der restlichen Variablen sind im folgenden aufgelistet, vgl. Fig. 15 a - d:

| | |
|---|---|
| $\mu$ groß ($A_0$ (①)) = 0,8; | $\mu$ klein ($A_0$ (①)) = 0,2: |
| $\mu$ groß ($A_V$ (①)) = 0,6; | $\mu$ klein ($A_V$ (①)) = 0,4: |
| $\mu$ groß ($A_0$ (②)) = 0,0; | $\mu$ klein ($A_0$ (②)) = 1,0: |
| $\mu$ groß ($A_V$ (②)) = 1,0; | $\mu$ klein ($A_V$ (②)) = 0,0: |

Nach der Fuzzifizierung der Variablen kann die Inferenz nach oben genannten Regeln gebildet werden. Im vorliegenden Fall liefern nur die Regeln 1 und 2 zur Bestimmung der linken Kante Zugehörigkeiten ungleich 0. Die UND- und ODER-Verknüpfungen werden bei den verwendeten Fuzzy-Algorithmen mit der Minimum- bzw. Maximummethode realisiert.

Regel 1 liefert einen Zugehörigkeitswert zur Ergebnisklasse ganz links (gl):

| WENN | $A_0$①klein ODER | $A_V$①groß |
|---|---|---|
| DANN | Linke Kante | ganz links (gl) |

$\mu$ gl = max ($\mu$ klein ($A_0$ (①)), $\mu$ groß ($A_V$ (①)) = max (0.2, 0.6) = 0.6

Mit Regel 2 wird eine Zugehörigkeit zur Klasse links (li) bestimmt:

| WENN | {($A_0$①groß | UND | $A_V$①klein) |
|---|---|---|---|
| ODER | $A_0$①groß} | | |
| UND | ($A_0$②klein | ODER | $A_V$②groß) |
| DANN | Linke Kante | links (li) | |

$\mu$ li=min(max(min($\mu$ groß($A_0$(①)),$\mu$ klein($A_V$(①))),$\mu$ groß($A_0$(①)))
     (max ($\mu$ klein ($A_0$ (②)), $\mu$ groß ($A_V$ (②)))))) =
     = min (max (min (0,8. 0.4), 0,8), max (1,0, 1,0)) = 0.8

Da alle anderen Regeln den Wert 0 liefern, ergeben sich als Ergebnis der Fuzzy-Inferenz die senkrecht schraffierten Bereiche, die die Zugehörigkeiten zu den Klassen ganz links und links darstellen. Um aus den unscharfen Werten eine konkrete Koordinate für die Position der linken Kante zu erhalten, wird das Ergebnis defuzzifiziert. Dies geschieht durch Berechnung des Flächenschwerpunktes der schraffierten Bereiche. Die waagerechte Koordinate dieses Punktes ist das Resultat der Fuzzy-Auswertung, also die Position der linken Objektkante. In diesem Fall hat sie den Wert -25 cm, in Fig. 16 durch eine senkrechte Linie dargestellt.

Die Inferenz zur Bestimmung der rechten Kante erfolgt auf die gleiche Weise, nur daß jetzt die Regeln 6-10 zur Anwendung kommen. Die oben angegebenen Regeln arbeiten am genauesten für niedrige, quaderförmige Objekte mit glatter Oberfläche. Für höhere Gegenstände können Abweichungen auftreten, da die nicht senkrecht verlaufenden Schallwege bei höheren Gegenständen andere Reflexionen liefern. Dem kann Abhilfe geschaffen werden, indem zwei oder mehrere an verschiedene Höhen angepaßte Regelsätze zur Anwendung kommen, deren Ergebnisse mit unterschiedlicher, der Höhe des Gegenstandes entsprechenden Gewichtung, gemittelt werden.

Bei der Auswertung werden auch rollenförmige Gegenstände oder Objekte mit gewölbter Oberfläche gut erkannt, obwohl die Reflexionssignale dieser Gegenstände sehr unterschiedliche Amplituden haben können. Zum Beispiel werden bei einer Reflexion an einer konkaven Oberfläche die Schallwellen, ähnlich wie bei einem Parabolmikrofon, zum Empfänger hin konzentriert, während eine Reflexion an einem konvexen Gegenstand nur ein sehr kleines Empfangssignal bewirkt. Aus diesem Grund werden, wie schon erwähnt, hauptsächlich die Amplituden der Untergrundreflexionen ausgewertet, da die Reflexionseigenschaften des Untergrunds immer gleich bleiben. So werden auch für Gegenstände mit nicht rechteckigem Querschnitt die linke und rechte Kante ermittelt. Als Ergebnis erhält man ein rechtwinklig verlaufendes Höhenprofil, unabhängig davon, wie der Gegenstand geformt ist.

Die oben genannten Regelsätze liefern nur korrekte Ergebnisse, wenn bei mindestens zwei Schallwegen eine Reflexion am Objekt erfolgt. Bei sehr schmalen Gegenständen kann es aber vorkommen, daß diese nur von einem Schallweg erfaßt werden. Aus dem Signalverlauf für diesen Weg kann zwar die Hohe ermittelt werden, aber über die Lage der Kanten kann keine Aussage gemacht werden. Erfolgt nur eine Reflexion am Objekt und keine am Untergrund, so kann angenommen werden, daß der Gegenstand zentriert zur Mittellinie des Schallwegs liegt und die Breite einen Maximalwert nicht überschreitet. Erhält man im Signal des Schallwegs dagegen zwei Maxima, das heißt teilweise Reflexion am Objekt und am Untergrund, so kann keine Aussage darüber gemacht werden, ob der Gegenstand mehr rechts oder mehr links liegt. Deswegen wird für diese Fälle, in denen nur ein Schallweg eine Objektreflexion aufweist, ein eigener Regelsatz verwendet. Die Kantenpositionen werden so ermittelt, als liege der Gegenstand zentriert zu dem Schallweg und die Breite habe einen bestimmten, durchschnittlichen Wert. Reicht die Genauigkeit dieser Annäherung nicht aus, so müssen die Ultraschallwandler in geringeren Abständen angeordnet werden, so daß auch schmale Gegenstände vom mindestens zwei Schallwegen erfaßt werden.

Bei der hier realisierten Versuchsanordnung (Wandlerhöhe 80 cm, Wandlerabstand 26 cm, maximal zulässige Objekthöhe 40 cm) wird eine Genauigkeit von 5 cm bei der Bestimmung der Kantenpositionen erreicht. Der maximale Fehler tritt meist dann auf, wenn eine Kante in dem schon beschriebenen unscharfen Bereich zwischen zwei Schallwegmittellinien liegt oder wenn der im letzten Abschnitt erwähnte Fall vorliegt, daß nur ein Schallweg eine Objektreflexion aufweist. Die Genauigkeit kann noch verbessert werden, indem die Wandler näher zusammen angeordnet werden. Das System gestaltet sich dann aufwendiger, da mehr Wandler zur Erfassung einer bestimmten Breite nötig werden.

Bestimmung der Länge

Mit dem beschriebenen Meßsystem wird bei einem Meßzyklus ein zweidimensionales Bild, das heißt das schon beschriebene Höhenprofil, in einer Ebene unter den Wandlern quer zur Bewegungsrichtung des Förderbandes gewonnen. Die Ausdehnung des Gegenstands in Förderrichtung dagegen kann nicht in einem Zyklus bestimmt werden, sondern es ist die Integration mehrerer Höhenprofile nötig. Der Meßvorgang zur Bestimmung der Länge eines auf dem Förderband bewegten Objekts läuft dann auf folgende Weise ab. In regelmäßigen Abständen wird ein Meßzyklus durchgeführt und das Höhenprofil des Bereiches, der sich zu diesen Zeitpunkten (oder genauer Zeitabschnitten, da ein Meßzyklus eine endliche Zeit andauert) unter den Wandlern befindet, bestimmt. Kann zum Beispiel ein Meßzyklus in 50 ms durchgeführt werden und das Förderband bewegt sich mit 1 m/s, so kann in Abständen von 5 cm ein Höhenprofil gewonnen werden. Werden diese Höhenprofile aneinandergereiht, so kann ein dreidimensionales Bild der unter den Wandlern vorbeibewegten Situation gewonnen werden.

Die Auflösegenauigkeit in Längsrichtung bestimmt sich aus der Zeit, die für einen Meßzyklus benötigt wird und aus der Geschwindigkeit, mit der das Förderband bewegt wird. Die Bestimmung des Höhenprofils funktioniert bei bewegter Meßsituation genauso gut wie bei statischen Meßungen.

**Patentansprüche**

1. Verfahren zur Bestimmung der Lage eines Objekts relativ zum Hintergrund mittels Ultraschall

    1.1 bei dem ein Ultraschall-Referenzsignal in Richtung des Hintergrunds abgestrahlt wird,
    1.2 bei dem vom Maximum $M_0$ des reflektierten Referenzsignals die Amplitude $A_{0ref}$ und der Zeitpunkt $t_0$ des Auftretens des Maximums $M_0$ gespeichert werden,
    1.3 bei dem ein Ultraschall-Meßsignal in Richtung des Objekts und des Hintergrunds abgestrahlt wird,
    1.4 bei dem, falls im reflektierten Meßsignal zum Zeitpunkt $t_0$ ein Maximum $M_V$ auftritt, dessen Amplitude $A_{0'}$ gespeichert wird,
    1.5 bei dem aus den Amplituden $A_{0ref}$ und $A_{0'}$ ein erster Verdeckungsgrad $V_1$ bestimmt wird, welcher ein Maß für die Verdeckung des Hintergrunds durch das Objekt und ein Maß für die Lage des Objekts ist, der um so größer ist, je kleiner die Amplitude $A_{0'}$ gegenüber der Amplitude $A_{0ref}$ ist.

2. Verfahren nach Anspruch 1,

    2.1 bei dem die Amplitude $A_{V'}$ eines im reflektierten Meßsignal auftretenden zweiten Maximums $M_{V'}$ gespeichert wird,
    2.2 bei dem aus den Amplituden $A_{V'}$ und $A_{0'}$ ein zweiter Verdeckungsgrad $V_2$ bestimmt wird, der um so größer ist, je größer die Amplitude $A_{V'}$ gegenüber der Amplitude $A_{0'}$ ist, und
    2.3 bei dem ein dritter Verdeckungsgrad $V_3$ gebildet wird, in welchen die beiden Verdeckungsgrade $V_1$ und $V_2$ abhängig von ihrer jeweiligen Gewichtung eingehen,
    2.4 bei dem die Gewichtungen durch die Objekteigenschaften festgelegt werden.

3. Verfahren nach Anspruch 1,

3.1 bei dem die Amplitude $A_{V'}$ eines im reflektierten Meßsignal auftretenden zweiten Maximums $M_{V'}$ gespeichert wird,

3.2 bei dem aus den Amplituden $A_{V'}$ und $A_{0'}$ ein zweiter Verdeckungsgrad $V_2$ bestimmt wird, der um so größer ist, je größer die Amplitude $A_{V'}$ gegenüber der Amplitude $A_{0'}$ ist, und

3.3 bei dem anhand des Zusammenhangs: $V_4 = \text{Max}(V_1, V_2)$ ein vierter Verdeckungsgrad $V_4$ gebildet wird.

4. Verfahren nach Anspruch 1, 2 oder 3,
bei dem ein Objektrand als erkannt gilt, wenn die Bedingungen erfüllt sind: Die Amplitude $A_{0'}$ ist kleiner als die Amplitude $A_{0ref}$ und die Amplitude $A_{0'}$ ist von Null verschieden.

5. Verfahren nach Anspruch 4,
bei dem der Ultraschall zeilenförmig in Richtung des Objekts und des Untergrunds ausgesandt wird.

6. Verfahren nach einem der Ansprüche 1 - 5,
bei dem an verschiedenen Meßorten das reflektierte Ultraschallsignal gemessen und jeweils der Verdeckungsgrad V bestimmt wird.

7. Verfahren nach Anspruch 1 - 6,
bei dem zur Erzeugung des Ultraschalls mehrere Ultraschallwandler verwendet werden, die gleichzeitig angesteuert werden, so daß sie gleichzeitig senden.

8. Verfahren nach Anspruch 7,
bei dem die Ultraschallwandler mit verschieden kodierten Signalen angeregt werden.

9. Verfahren nach Anspruch 7,
bei dem die Ultraschallwandler mit verschiedenen Frequenzen angeregt werden.

10. Verfahren nach einem der Ansprüche 1 - 6,
bei dem die zur Erzeugung des Ultraschalls verwendeten Ultraschallwandler sequentiell angesteuert werden, so daß sie sequentiell senden.

11. Verfahren nach einem der Ansprüche 1 - 10,
bei dem eine Relativbewegung zwischen dem Objekt und den Ultraschallwandlern stattfindet.

12. Verfahren nach einem der Ansprüche 1- 11,
bei dem die Verdeckungsgrade mittels Fuzzy-Logik bestimmt werden.

13. Verwendung des Verfahrens nach einem der Ansprüche 1-12,
für eine Förderanlage.

## Claims

1. Method for determining the position of an object relative to the background by means of ultrasound,

1.1 in which an ultrasonic reference signal is radiated in the direction of the background,

1.2 in which the amplitude $A_{0ref}$ of the maximum $M_0$ of the reflected reference signal, and the instant to of the occurrence of the maximum $M_0$ are stored,

1.3 in which an ultrasonic measuring signal is radiated in the direction of the object and of the background,

1.4 in which if a maximum $M_V$ occurs in the reflected measuring signal at the instant $t_{0'}$ the amplitude $A_{0'}$ of said maximum is stored, and

1.5 in which there is determined from the amplitudes $A_{0ref}$ and $A_{0'}$ a first degree of masking $V_1$, which is a measure of the masking of the background by the object and a measure of the position of the object, and is larger the smaller the amplitude $A_{0'}$ in comparison with the amplitude $A_{0ref}$.

2. Method according to Claim 1,

2.1 in which the amplitude $A_{V'}$ of a second maximum $M_{V'}$ occurring in the reflected measuring signal is stored,

2.2 in which there is determined from the amplitudes $A_{V'}$ and $A_{0'}$ a second degree of masking $V_2$, which is larger the larger the amplitude $A_{V'}$ in comparison with the amplitude $A_{0'}$.

2.3 in which a third degree of masking $V_3$ is formed in which the two degrees of masking $V_1$ and $V_2$ feature as a function of their respective weighting, and

2.4 in which the weightings are fixed by the object characteristics.

3. Method according to Claim 1,

3.1 in which the amplitude $A_{V'}$ of a second maximum $M_{V'}$ occurring in the reflected measuring signal is stored,

3.2 in which there is determined from the amplitudes $A_{V'}$ and $A_{0'}$ a second degree of masking $V_2$, which is larger the larger the amplitude $A_{V'}$ in comparison with the amplitude $A_{0'}$, and

3.3 in which a fourth degree of masking $V_4$ is formed with the aid of the relationship: $V_4 = \text{Max}(V_1, V_2)$.

4. Method according to Claim 1, 2 or 3, in which an object edge is considered detected when the following conditions are fulfilled: the amplitude $A_{0'}$ is smaller than the amplitude $A_{0ref}$, and the amplitude $A_{0'}$ differs from zero.

5. Method according to Claim 4, in which the ultrasound is emitted in the form of a line in the direction of the object and of the background.

6. Method according to one of Claims 1-5, in which the reflected ultrasonic signal is measured at different measuring points and the degree of masking V is determined in each case.

7. Method according to Claims 1-6, in which to generate the ultrasound use is made of a plurality of ultrasonic transducers which are driven simultaneously so that they transmit simultaneously.

8. Method according to Claim 7, in which the ultrasonic transducer is excited by different coded signals.

9. Method according to Claim 7, in which the ultrasonic transducers are excited by different frequencies.

10. Method according to one of Claims 1 - 6, in which the ultrasonic transducers used to generate the ultrasound are driven sequentially so that they transmit sequentially.

11. Method according to one of Claims 1-10, in which a relative movement takes place between the object and the ultrasonic transducers.

12. Method according to one of Claims 1-11, in which the degrees of masking are determined by means of fuzzy logic.

13. Use of the method according to one of Claims 1-12 for a conveying system.

**Revendications**

1. Procédé pour déterminer la position d'un objet par rapport à l'arrière-plan par ultrasons,

1.1 dans lequel un signal de référence ultrasonore est envoyé en direction de l'arrière-plan,

1.2 dans lequel l'amplitude $A_{0ref}$ du maximum $M_0$ du signal de référence réfléchi et le moment to de l'apparition du maximum $M_0$ sont stockés,

1.3 dans lequel un signal de mesure ultrasonore est envoyé en direction de l'objet et de l'arrière-plan,

1.4 dans lequel, si un maximum Mv apparaît dans le signal de mesure réfléchi au moment to, l'amplitude $A_0'$ de celui-ci est stockée,

1.5 dans lequel un premier degré de recouvrement $V_1$ est déterminé à partir des amplitudes $A_{0ref}$ et $A_0'$, qui

est une grandeur du recouvrement de l'arrière-plan par l'objet et une grandeur de la position de l'objet et qui est d'autant plus grand que l'amplitude $A_0'$ par rapport à l'amplitude $A_{0ref}$ est petite.

2. Procédé selon la revendication 1,

   2.1 dans lequel l'amplitude $A_V'$ d'un deuxième maximum $M_V'$ apparaissant dans le signal de mesure réfléchi est stockée,
   2.2 dans lequel un deuxième degré de recouvrement $V_2$ est déterminé à partir des amplitudes $A_V'$ et $A_0'$, qui est d'autant plus grand que l'amplitude $A_V'$ par rapport à l'amplitude $A_0'$ est grande, et
   2.3 dans lequel un troisième degré de recouvrement $V_3$ est calculé, dans lequel rentrent les deux degrés de recouvrement $V_1$ et $V_2$ en fonction de leur pondération respective,
   2.4 dans lequel les pondérations sont définies par les caractéristiques de l'objet.

3. Procédé selon la revendication 1,

   3.1 dans lequel l'amplitude $A_V'$ d'un deuxième maximum $M_V'$ apparaissant dans le signal de mesure réfléchi est stockée,
   3.2 dans lequel un deuxième degré de recouvrement $V_2$ est déterminé à partir des amplitudes $A_V'$ et $A_0'$, qui est d'autant plus grand que l'amplitude $A_V'$ par rapport à l'amplitude $A_0'$ est grande, et
   3.3 dans lequel un quatrième degré de recouvrement $V_4$ est formé à l'aide de la relation : $V_4 = Max (V_1, V_2)$.

4. Procédé selon la revendication 1, 2 ou 3, dans lequel un bord d'objet est considéré comme reconnu, si les conditions suivantes sont remplies : l'amplitude $A_0'$ est plus petite que l'amplitude $A_{0ref}$ et l'amplitude $A_0'$ est différente de zéro.

5. Procédé selon la revendication 4, dans lequel l'ultrason est envoyé en lignes en direction de l'objet et du fond.

6. Procédé selon l'une des revendications 1 à 5, dans lequel le signal ultrasonore réfléchi est mesuré en différents points de mesure et le degré de recouvrement V est déterminé à chaque fois.

7. Procédé selon l'une des revendications 1 à 6, dans lequel plusieurs transducteurs ultrasonores sont utilisés pour générer l'ultrason, qui sont activés simultanément de manière à émettre simultanément.

8. Procédé selon la revendication 7, dans lequel les transducteurs ultrasonores sont activés par différents signaux codés.

9. Procédé selon la revendication 7, dans lequel les transducteurs ultrasonores sont activés par différentes fréquences.

10. Procédé selon l'une des revendications 1 à 6, dans lequel les transducteurs ultrasonores utilisés pour générer l'ultrason sont activés de façon séquentielle de manière à émettre de façon séquentielle.

11. Procédé selon l'une des revendications 1 à 10, dans lequel un mouvement relatif a lieu entre l'objet et les transducteurs ultrasonores.

12. Procédé selon l'une des revendications 1 à 11, dans lequel les degrés de recouvrement sont déterminés par logique floue.

13. Utilisation du procédé selon l'une des revendications 1 à 12 pour une installation de transport.

## FIG 1

## FIG 2

FIG 3

S(f) 1,0

FIG 4

U/µV

FIG 5a

FIG 5b

yz-Ebene

xz-Ebene

## FIG 6

fs(t) ● ⟶ [ hs(t) ] ⟶ ts(t) [ |◻| ]

Ausbreitungs-medium

m(t)

r(t)

Reflektor

te(t) [ |◻| ] ⟶ [ he(t) ] ⟶ ● fe(t)

## FIG 7

[ ⊥ ] ⟶ Sender [ |◻| ] ⟶ Schallweg ⟶ Empfänger [ |◻| ] ⟶ [ ▷| ] [ TP ] ⟶ [ ⌐⌐ ]

Demodulation

## FIG 8

[ ⋀⋁ ] S 1 [ |◻| ] ⟶ Schallweg 1

[ ⊢ ] [ |◻| ] ⟶ Schallweg 2

S 2

z.B. E 1 [ |◻| ]

[ Tiefpaß 50 kHz ] ⟶ [ ▷| ] [ TP ] ⟶ [ ⌐⌐ ]

Demodulation

[ Hochpaß 60 kHz ] ⟶ [ ▷| ] [ TP ] ⟶ [ ⌐⌐ ]

Demodulation

FIG 9

FIG 10a

FIG 10b

FIG 11a

FIG 11b

## FIG 12a

## FIG 12b   FIG 12c   FIG 12d   FIG 12e   FIG 12f

FIG 13a

FIG 13b

FIG 14

FIG 15a

FIG 15b

FIG 15c

FIG 15d

FIG 16